Europäisches Patentamt

(19) European Patent Office

Office européen des brevets

(11) Publication number: **0 001 020**
A1

(12) # EUROPEAN PATENT APPLICATION

(21) Application number: 78300332.0

(22) Date of filing: 31.08.78

(51) Int. Cl.²: **B 60 P 1/18**

(30) Priority: 31.08.77 GB 36307/77

(71) Applicant: Hoy, Gordon, Trecan Farm Lanreath, Looe Cornwall (GB)

(43) Date of publication of application: 07.03.79 Bulletin 79/5

(72) Inventor: Hoy, Gordon, Trecan Farm Lanreath, Looe Cornwall (GB)

(74) Representative: Stephens, Michael John, M.J. Stephens & Co. Royal Building 11 St. Andrew's Cross, Plymouth Devon PL1 2DS (GB)

(84) Designated Contracting States: BE CH DE FR GB LU NL SE

(54) **Tipping vehicle.**

(57) A tipping trailer or other vehicle has a tipping body (4) hinged to a wheeled chassis (1) about a rear hinge axis (5). The rear wheels (3) are carried by a linkage (7) which is connected to the body elevating actuator (12) so that the single actuator performs both the operation of tipping the trailer body and displacing the rear wheels in a rearward direction, so as to prevent the centre of gravity of the tipping body passing over the rear wheels and causing a dangerous overbalancing condition.

EP 0 001 020 A1

0001020

## Tipping Vehicle

This invention relates to tipping vehicles, that is, vehicles having tipping platforms or bodies, with particular, but not exclusive, reference to tipping trailers.

Trailers with tipping bodies are used extensively on farms and are commonly towed behind agriculatural tractors. The tipping body of the trailer is generally hinged about an axis located at the rear of the trailer, rearwardly of the rear wheel axle of the trailer, or the rearmost wheel axle in the case of a trailer having more than one rear wheel. When such a trailer is heavily laden the tipping of the trailer body displaces the centre of gravity of the loaded body rearwardly, and if the load carried by the trailer is one which does not slide easily, such as wet silage, the centre of gravity of the load can pass over the rear axle of the trailer as the body is tipped, before the load is discharged. When this occurs a dangerous "over-centre" situation can arise, where the trailer load, which may be considerable heavier than the tractor, exerts a turning moment about the point of contact of the trailer rear wheels with the ground in a sense to lift the front of the trailer, and the tractor connected to it, clear of the ground. This can lead to a so-called "vertical jacknife" in which the tractor is lifted off the ground and overturns. Even if this dangerous situation does not arise, the rear wheels of the tractor may be lifted clear of the ground so that the tractor cannot be moved.

Arrangements have been proposed in which the rear wheels of a trailer are displaced rearwardly, for example along horizontal slideways, under control of suitable actuators, during tipping of the trailer body, so that the centre of gravity of the body and the load carried by it does not reach a dangerous over-centre position in relation to the rear wheel axle. Such arrangements are, however, generally complicated and expensive. An object of the present invention is to provide an improved trailer or other vehicle having a tipping body in which the provision is made for rearward displacement of rear load supporting wheels during tipping, using a simple and robust mechanism.

According to the present invention there is provided a trailer or other vehicle having a tipping body hinged to a chassis about a hinge axis, the chassis being supported near the said hinge axis by wheels which are displaceable in a direction transverse the wheel axes towards the vertical plane containing the said hinge axis, characterised in that the tipping body and the displaceable wheels are movable simultaneously by common actuator means.

The tipping body may be of any convenient form, and may be in the form of a flat platform.

The actuator means, which would normally comprise at least one hydraulic actuator would in practice be a relatively expensive component. By utilising the same actuator means to effect both tipping of the body and rearward displacement of the rear wheel axes, the present invention affords a safety tipping mechanism with economy of parts and construction.

- 3 -                    0001020

The actuator means preferably comprise at least one extensible, elongate jack connected at one end to the tipping body and at the other end to a crank member pivoted at two spaced apart points to the chassis and to one end of an elevating link, the other end of said link being pivotally connected to the body, and the displaceable wheel or wheels being carried by the crank member with the wheel axle spaced from the pivot point of the crank member on the chassis so that extension of the jack causes pivotal movement of the crank member about the chassis pivot point, resulting in simultaneous raising of the elevating link and rearward and downward displacement of the said wheel axle.

The downward displacement of the rear wheel axle relative to the vehicle chassis caused upon tipping of the body results in a lifting of the rear of the chassis, since the rear wheels remain on the ground. The combined tipping and lifting of the body facilitates the tipping of materials in some circumstances, for example when tipping into a container or skip, and also promotes the tipping of a load clear of the rear of the vehicle.

There are preferably two crank members pivoted to opposite longitudinal sides of the chassis, so that the space between the chassis and the tipping body or platform is unobstructed.

The crank member may comprise a bellcrank lever or lever plate, the respective pivotal connections of the crank member to the chassis, the actuator and the elevating link being disposed at the vertices of a triangle.

In a preferred embodiment of the invention each crank member is pivotally connected to the associated actuator at a joint which is closer to the axle of the associated wheel than the pivotal connections of the crank member to the chassis and to the elevating link.

The invention will be further described, by way of example, with reference to the accompanying purely diagrammatic drawings, in which:

Figure 1 is a schematic side elevation of a tipping trailer of conventional construction according to the prior art;

Figure 2 is a schematic side elevation similar to Figure 1 illustrating a tipping trailer according to the present invention;

Figure 3 is a diagrammatic side elevation of part of a tipping trailer according to one embodiment of the invention, and

Figure 4 is a diagrammatic side elevation on an enlarged scale illustrating part of the tipping mechanism of a trailer according to another embodiment of the invention.

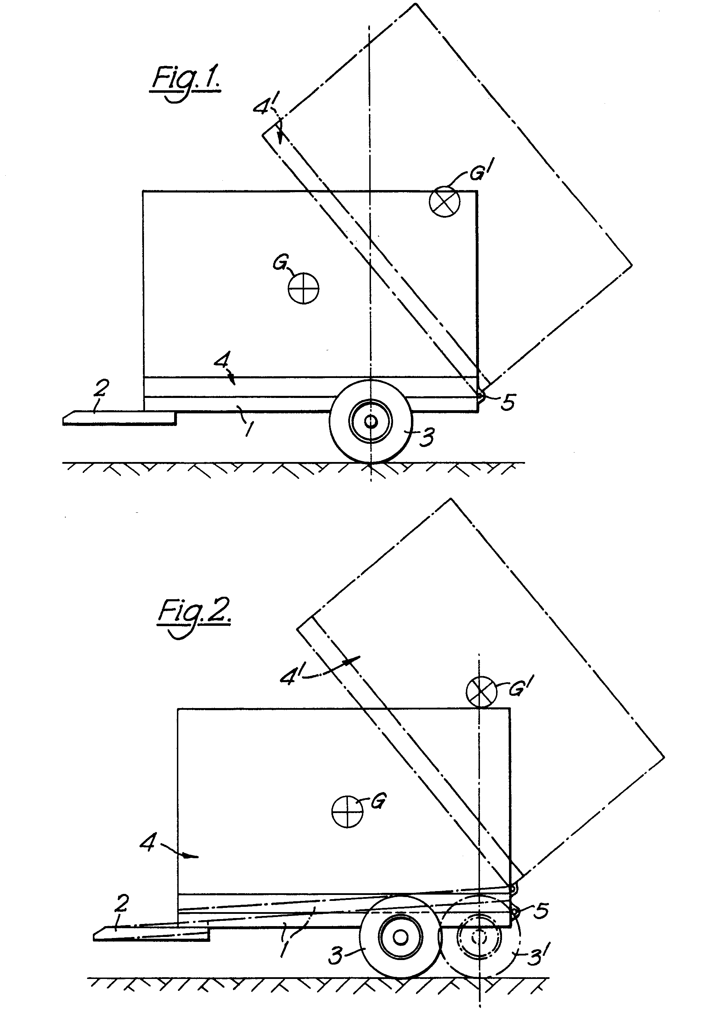

Figure 1 of the drawings shows a conventional trailer having a chassis 1 provided at its front end with a tow bar 2 for connection to a towing vehicle such as a tractor and a single pair of wheels 3 mounted on a common axle supporting the chassis 1. A tipping body 4 is hinged to the chassis 1 at the rear end of the latter about a horizontal transverse hinge axis 5. An hydraulic actuator or actuators (not shown) is arranged to effect tipping of the body 4 about the hinge axis 5 to a tipping position shown in broken outline in Figure 1.

The centre of gravity of the body 4 when laden is indicated diagrammatically at G. When the body 4 is tipped the centre of gravity is displaced to the position indicated G1, in which it is positioned rearwardly of the vertical plane passing through the point of contact of the rear wheels 3 with the ground. In this over-centre position the weight of the loaded body exerts a turning moment about the point of contact of the wheels 3 with the ground which may be sufficient to cause the front of the trailer, and any tractor connected to it, to be lifted off the ground, particularly where the trailer carries a heavy load which slides only with difficulty, so that a large part of the load "sticks" to the bottom of the trailer body 4 as it is tipped.

The present invention provides a trailer, an example of which is illustrated diagrammatically in Figure 2, in which the rear wheels 3 are displaceable rearwardly, for example by displacement of the wheel axle, simultaneously with the tipping of the trailer body 4. The rearward displacement of the wheels 3 is sufficient to prevent the centre of gravity G of the loaded body 4 from reaching a dangerous over-centre position with regard to the vertical plane passing through the point of contact of the wheels 3 with the ground. Thus, as shown in Figure 2, the centre of gravity G1 of the tilted body 4 lies substantially in the vertical plane passing through the rearwardly displaced trailer wheels, indicated by the broken outline 31.

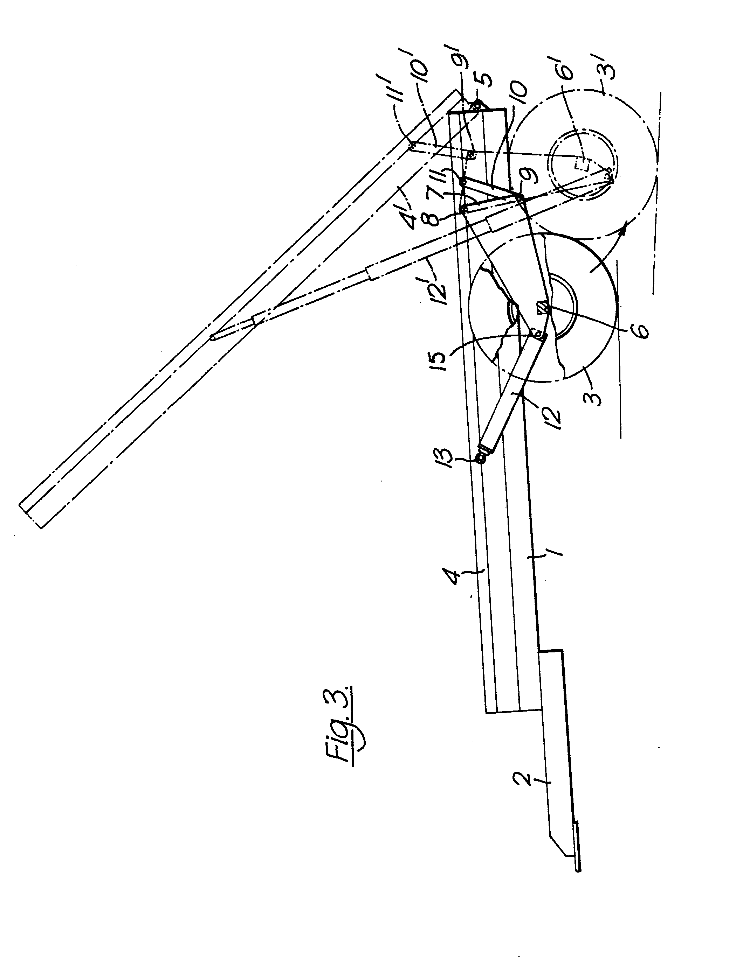

A mechanism for effecting the rearward displacement of the trailer wheels 3 is illustrated diagrammatically in side elevation in Figure 3. The rear wheels 3 are carried on an axle 6 which supports the chassis 1. Opposite ends of the axle 6, inwardly of the wheels 3, are supported by respective pivoted triangular crank members 7, one of which is shown pivotally connected to a respective upstanding lug 8 fixed to the respective side of the chassis 1 for pivotal movement about a pivot axis 9 which is disposed rearwardly with respect to the wheel axle 6. A vertex or elbow of the crank member 7 is pivotally connected by means of a pivot pin 9 to a lower end of an elevating link 10 the upper end of which is pivotally connected by means of a pivot pin 11 to a point on the tipping body or platform 4 forwardly of the hinge axis 5 thereof.

Respective hydraulic rams 12 are interposed between pivot connections 15 at the forward ends of the respective crank members 7, forwardly of the wheel axle 6, and respective pivotal connections 13 on the tipping body or platform 4, the two hydraulic rams 12 being disposed on opposite sides of the trailer chassis.

When the hydraulic rams 12, which are connected in a common hydraulic supply circuit, are extended, the crank members 7 pivot about the common pivot axis defined by the pivot axis 9 on the chassis 1, causing the crank members 7 to swing in an anti-clockwise direction as viewed in Figure 3, about the said axis. This pivotal movement causes simultaneous downward and rearward displacement of the wheel axle 6 relative to the trailer chassis 1, while at the same time the elevating links 10 are displaced upwardly. This upward movement of the links 10, accompanied by the extension of the rams 12, causes tipping of the platform or body 4 about the rear hinge axis 5. The positions adopted by the body or platform 4 and the trailer wheels 3 when the hydraulic rams 12 are extended are shown diagrammatically in broken outline in Figure 3. Since, however, the wheels 3 remain stationary on solid ground, the displacement of the wheel axle 6 downwardly relative to the chassis 1 will result in lifting of the rear of the chassis 1 relative to the ground on which the wheels 3 stand when the body or platform 4 is tipped.

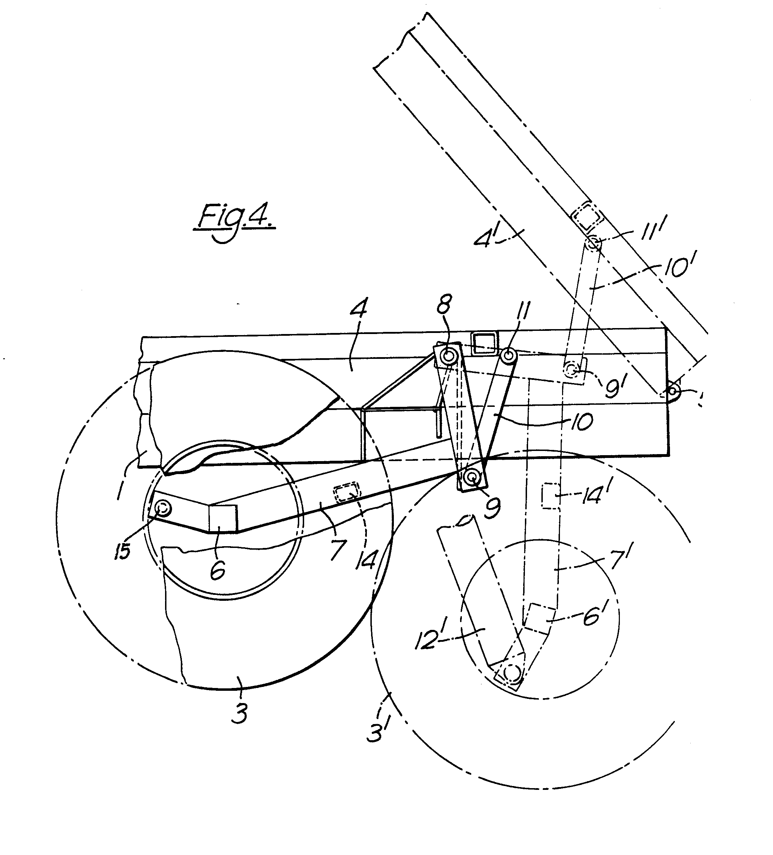

Figure 4 illustrates on an enlarged scale a typical linkage for effecting rearward displacement of the trailer wheels 3 and tipping of the trailer body or platform 4, parts corresponding to those illustrated in Figure 3 being shown by the same reference numerals. It will be seen that the crank member 7 which in Figure 3 is of hollow "box" construction and fabricated in sheet steel, is in the embodiment of Figure 4 replaced by an L-shaped "bellcrank" lever fabricated from square-section tube or angle-section bars. Transverse bracing struts, one of which is shown diagrammatically at 14, interconnect the crank members 7 on the opposite sides of the trailer chassis 1.

Although the illustrated embodiments have been described with reference to trailers having single rear

0001020

wheel axles, the invention is also applicable to four wheeled trailers having two rear axles. The invention is also applicable to tipping vehicles generally, and is not confined to tipping trailers.

In the above embodiment, the connections 13 are shown in a preferred position, forward of the normal positions of the wheel axles 6, but they may be located rearwardly of the axles 6.

In an alternative embodiment of the invention (not illustrated), the rams 12 are interposed between pivot connections on the tipping body or platform 4 and pivot connections on the chassis 1, rather than the connections 15 on the crank members 7. The rams do not in this case act directly on the crank members 7, but the upward movement of the links 10, on raising of the platform 4 by extension of the rams 12, causes simultaneous rearward displacement of the wheel axles 6, pivoting with the respective crank members 7 about the respective lugs 8.

0001020

1. A trailer or other vehicle having a tipping body (14) hinged to a chassis (1) about a hinge axis (5), the chassis (1) being supported near the said hinge axis by wheels (3) which are displaceable in a direction transverse the wheel axes towards the vertical plane containing the said hinge axis, characterised in that the tipping body (4) and the displaceable wheels (3) are movable simultaneously by common actuator means (12).

2. A vehicle as claimed in Claim 1, in which the actuator means comprise at least one extensible elongate jack (12) connected at one end to the tipping body (4) and at the other end to a crank member (7) pivoted at two spaced apart points to the chassis (1) and to one end of an elevating link (10) the other end of said link being pivotally connected to the body (4), and the displaceable wheel or wheels (13) being carried by the crank member (7) with the wheel axle (6) spaced from the pivot point (8) of the crank member on the chassis (1) so that extension of the jack or jacks (12) causes pivotal movement of the crank member about the chassis pivot point (8), resulting in simultaneous raising of the elevating link (10) and rearward and downward displacement of the said wheel axle (6).

3. A vehicle as claimed in Claim 2, in which the crank member (7) comprises a bellcrank lever or lever plate, the respective pivotal connections (8,15,9) of the crank member (7) to the chassis (1), the actuator (12) and the elevating link (10) being disposed at the vertices of a triangle.

4. A vehicle as claimed in Claim 3, in which the lever arm of the crank member (7) between the pivotal connections (15,9) of the crank member to the actuator (12) and the elevating
link (10) is longer than the lever arm between the pivotal
connections  (9, 8) of the crank member (7) to the elevating
link and the chassis.

5.   A vehicle as claimed in Claim 3 or Claim 4, in which
the displaceable wheel axle (6) is carried by the crank
member (7) between the pivotal connection (15) to the
actuator (12) and the pivotal connection (9) to the
elevating link (10).

6.   A vehicle as claimed in any of Claims 2 to 5, in
which there are two said crank members pivoted to
opposite longitudinal sides of the chassis (1).

7.   A vehicle as claimed in any one of the preceding
claims in which the actuator means comprise at least
one hydraulic actuator (12).

8.   A vehicle as claimed in any of Claims 2, 3, 4 or 5
in which each crank member (7) is pivotally connected to
the associated actuator at a joint which  is closer
to the axle of the associated wheel than the pivotal
connections of the crank member to the chassis and to
the elevating link.

9. A vehicle as claimed in Claim 1, in which the actuator means comprise at least one extensible elongate jack connected at one end to the tipping body (4) and at the other end to the chassis (1).

10. A vehicle as claimed in Claim 9, including a crank member (7) pivoted at two spaced apart points to the chassis (1) and to one end of an elevating link (10), the other end of said link being pivotally connected to the body (4), and the displaceable wheel or wheels (13) being carried by the crank member (7) with the wheel axle (6) spaced from the pivot point (8) of the crank member on the chassis (1) so that extension of the jack or jacks (12) causes pivotal movement of the crank member about the chassis pivot point (8), resulting in simultaneous raising of the elevating link (10) and rearward and downward displacement of the said wheel axle (6).

Fig.1.

Fig.2.

0001020

Fig. 3

*Fig.4.*

# EUROPEAN SEARCH REPORT

**European Patent Office**

0001020

Application number

EP 78 30 0332

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | NL - A - 68 14313 (VISSERS) <br> * Columns 1,2; figure 2 * | 1,2,7 | B 60 P 1/18 |
| | FR - A - 1 500 599 (BUCHER-GUYER) <br> * Abstracts; figures 3,10 * | 1 | |
| | FR - A - 2 285 065 (LECOMTE) <br> * Claims 1,4,5; figures 4,5 * | 1 | **TECHNICAL FIELDS SEARCHED (Int.Cl.²)** <br><br> B 60 P <br> A 01 D |
| A | US - A - 3 336 080 (HECK-ROSS) <br> * Claim 1; figure 6 * | 1 | |
| A | FR - A - 2 329 473 (BRUNEL) <br> * Claim 1; figure 3 * | 1 | |
| A | FR - A - 1 269 977 (CATERPILLAR) <br> * Abstract; figure 3 * | 1 | |
| A | GB - A - 1 442 387 (WAREING) <br> * Claim 1; figure 1 * | 1 | **CATEGORY OF CITED DOCUMENTS** |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search <br> The Hague | Date of completion of the search <br> 06-12-1978 | Examiner <br> SCHMITTER |

EPO Form 1503.1 06.78